# EUROPEAN PATENT SPECIFICATION

(11) **EP 4 011 736 B1**
(45) Date of publication and mention of the grant of the patent: **11.12.2024**
(21) Application number: 21212455.6
(22) Date of filing: 06.12.2021
(51) Int. Cl.: B60W 60/00, B60W 40/09, B60W 50/10, B60W 50/00

(54) **METHOD AND APPARATUS FOR MIXED MODE AUTOMATED DRIVING**
VERFAHREN UND VORRICHTUNG FÜR AUTONOMES FAHREN IM GEMISCHTEN FAHRMODUS
VÉHICULE ET DISPOSITIF POUR CONDUITE AUTONOME À MODE MIXTE

(30) Priority: 11.12.2020 US 202017119973
(43) Date of publication of application: 15.06.2022
(73) Proprietor: HERE Global B.V., 5611 ZT Eindhoven (NL)
(72) Inventor: Stenneth,, Leon, Chicago, 60606 (US); Beaurepaire,, Jerome, Chicago, 60606 (US); Young,, Jeremy Michael, Chicago, 60606 (US)
(74) Representative: Potter Clarkson

(56) References cited:
- EP-A1- 3 590 781
- US-A1- 2016 026 181
- US-A1- 2016 093 211
- US-A1- 2016 305 787
- US-A1- 2019 009 794
- US-A1- 2020 164 895
- US-B1- 9 188 985

## Description

### FIELD

The following invention relates to the mixed mode automated driving, including a combination of one or more automated driving operations and one or more manual driving operations.

### BACKGROUND

The term autonomous vehicle may refer to a self-driving or driverless mode in which no passengers are required to operate the vehicle. An autonomous vehicle may be referred to as a robot vehicle or an automated vehicle. The autonomous vehicle may include passengers, but no driver is necessary. These autonomous vehicles may park themselves or move cargo between locations without a human operator.

A mixed mode vehicle may include some autonomous features combined with some manual features. However, many challenges have arisen in the determination of how to determine that manual features are compatible with certain autonomous features.

US patent application Pub. No. "US 2020/164895A1" discloses a method, which includes: determining, by a computer device, conditions along a predefined driving route of a vehicle; determining, by the computer device and based on the conditions, risk factors of segments of the driving route; determining, by the computer device, an optimal one of the segments for switching the vehicle from autonomous driving mode to manual driving mode; and outputting, by the computer device, data defining the determined optimal one of the segments.

US patent application Pub. No. "US9188985B1" discloses generating and providing route options for an autonomous vehicle. For example, a user may identify a destination, and in response the vehicle's computer may provide routing options to the user. The routing options may be based on typical navigating considerations such as the total travel time, travel distance, fuel economy, etc. Each routing option may include not only an estimated total time, but also information regarding whether and which portions of the route may be maneuvered under the control of the vehicle alone (fully autonomous), a combination of the vehicle and the driver (semiautonomous), or the driver alone. The time of the longest stretch of driving associated with the autonomous mode as well as map information indicating portions of the routes associated with the type of maneuvering control may also be provided.

US patent application Pub. No. "US2016/093211A1" discloses a method for operating a navigation system for a motor vehicle with autopilot is disclosed, wherein the autopilot is designed to automatically carry out longitudinal and lateral guidance of the motor vehicle in the activated state during a piloted journey without assistance from a driver. The navigation system determines, for a destination prescribed by the user, a route to the destination on the basis of navigation data. The roads on which the activation of the autopilot is likely to be possible is determined using traffic data and on the basis of a predetermined activation condition for the autopilot.

US patent application Pub. No. "US 2016/305787 A1" discloses A route searching system, a route searching method, and computer program are provided that enable selection of an appropriate recommended route for a user in consideration of interruption of automated driving control. The route searching system is configured to: when a recommended route from a departure point to a destination including an automated driving section where automated driving control of a vehicle is performed is searched for, acquire a plurality of candidate routes as candidates for the recommended route (S4); for each candidate route, specify an interruption section where the automated driving control is interrupted in the automated driving section in the candidate route (S8, S9); based on the interruption section, for each candidate route, acquire interruption information indicating that the automated driving control is interrupted in the automated driving section in the candidate route (S10); and, based on the interruption information, select the recommended route from the candidate routes.

US 2019/009794 A1 discloses a collaborative system for providing collaborative control of a vehicle. Manual inputs and autonomous inputs for controlling the vehicle are blended together into collaborative controls.

### SUMMARY

According to a first aspect of the invention, a method comprising the features of claim 1 is provided.

According to a second aspect of the invention, an apparatus comprising the features of claim 8 is provided.

According to a third aspect of the invention, a non-transitory computer readable medium comprising the features of claim 10 is provided.

### BRIEF DESCRIPTIONS OF THE DRAWINGS

Exemplary embodiments of the present invention are described herein with reference to the following drawings.
Figure 1 illustrates an example system for mixed mode driving.
Figure 2 illustrates a first embodiment of a mixed mode driving controller for the system of Figure 1.
Figure 3 illustrates an example mixed mode recommendation.
Figure 4 illustrates a second embodiment of a mixed mode driving controller for the system of Figure 1.
Figure 5 illustrates an example mixed mode recommendation for multiple passengers.
Figure 6 illustrates an example cost analysis for mixed mode driving.
Figure 7 illustrates an example server for the system of Figure 1.
Figure 8 illustrates an example mobile device for the system of Figure 1.
Figure 9 illustrates an example flow chart for the mobile device of Figure 8.
Figure 10 illustrates exemplary vehicles for the system of Figure 1.

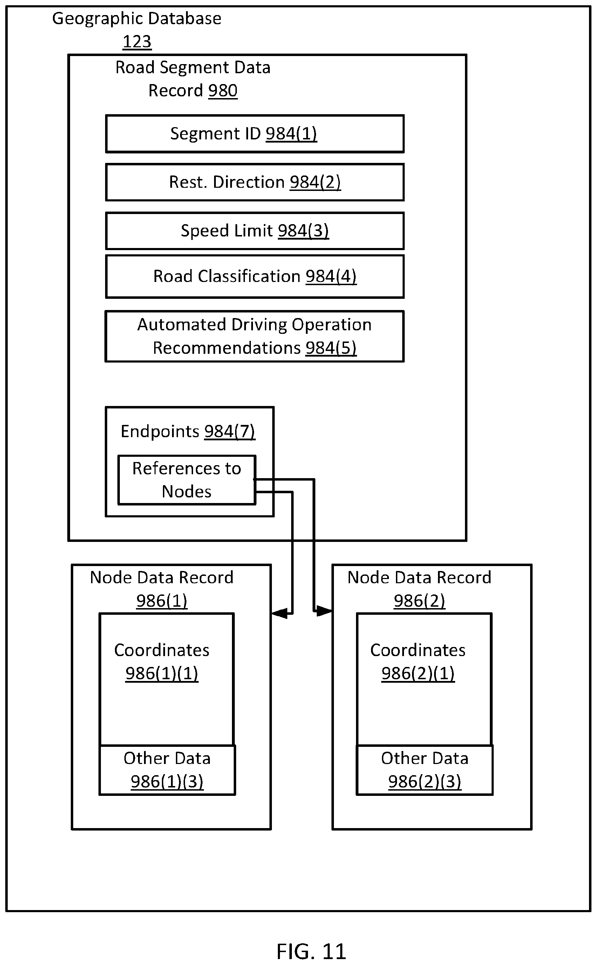

Figure 11 illustrates an exemplary database.

### DETAILED DESCRIPTION

A simultaneous mix mode vehicle is a vehicle that a human driver and a computer driver operate at the same time. For example, in one driving session, the computer operates the steering while the driver operates the brake. These and other driving operations may be assigned to either the computer or the human driver. The following embodiments include apparatus for the selection of driving operations, generation of recommendations for the assignment of driving operations, and application of the assignment of driving operations to either the computer or the human driver simultaneously.

A list of possible driving operations may be provided in a user interface (Ul), which may be a vehicle-integrated navigation display or on a mobile device (e.g., phone) that is connected to the vehicle or otherwise associated with the vehicle. The driver, or a passenger, may operate the Ul to select one or more driving operations to be performed automatically by the vehicle and/or one or more driving operations that the driver or user would like to perform.

In one example, the driving operations includes steering, braking, acceleration, horn, left turn signal, and right turn signal. Other driving operations are possible and listed below. The human operator may select the driving operation that they desire to perform. For one example, the human operator could choose steering and left turn signal. This selection causes both the steering and left turn signal to be under human operation as the vehicle drives. The other operations such as braking, acceleration, horn and right turn signal would be under the operation of the machine/computer. If none of the driving operations are selected by the human operator, the vehicle drives in fully autonomous mode. If all of the operations are selected by the human operator, the vehicle drives in manual mode.

The user may make selections for the driving operations on a trip basis or in real time. In real time, the user may want to take over certain driving operations and subsequently relinquish control. For example, the user may change operation when driving past aa point of interest (POI). The autonomous vehicle may default to drive at the speed limit in autonomous mode. For this case, the user may select to control of the braking and acceleration in order to drive more slowly and explore the POI.

Many other driver assistance features aid drivers in driving and parking a vehicle. Various subsets of these features may sometimes be referred to as "automated driving," "highly assisted driving," "advanced driving assistance systems," or "autonomous driving," but driver assistance features may have different levels of sophistication, ranging from simple warning to complex systems that may drive a car without user input. The driver assistance features may be enabled by an engine control management (ECM) system on a vehicle. The driver assistance features may rely on different sensor technologies and high definition (HD) MAP or dynamic backend content, including traffic information services, to aid the in-vehicle ECM system for the right decision strategy as how to drive along the road network

The driving operations may also be selected, recommended, and/or displayed according to hierarchies or levels. That is, rather than recommending and selecting individual driving operations, set of driving operations may be recommended or selected. The society of automotive engineers (SAE) sorts driver assistance features into different levels, ranging from 0 to 5. In Level 0, an automated system may issue warnings and may momentarily intervene, but has no sustained vehicle control. In level 1, the driver and the automated system share control of the vehicle. Examples of level 1 include adaptive cruise control (ACC), where the driver controls steering and the automated system controls speed, and parking assistance, where steering is automated while speed is manual. Level 1 may be referred to as "hands off" because the driver should be prepared to retake full control of the vehicle at any time. Lane keeping assistance (LKA) Type II is a further example of level 1 driver assistance.

In level 2, the automated system takes full control of the vehicle (accelerating, braking, and steering). The driver monitors the driving and be prepared to intervene immediately at any time if the automated system fails to respond properly. Though level 2 driver assistance may be referred to as "hands off" because the automated system has full control of acceleration braking and steering, in some cases, contact between hand and steering wheel is often required to confirm that the driver is ready to intervene. In this way, the driver supervises the actions of the driver assistance features.

In level 3, the driver can safely turn their attention away from the driving tasks, e.g. the driver can text or watch a movie. Level 3 may be referred to as "eyes off." The vehicle may handle situations that call for an immediate response, such as emergency braking. The driver should still be prepared to intervene within some limited period of time, often specified by the manufacturer, when called upon by the vehicle to do so. The car has a so-called "traffic jam pilot" that, when activated by a human driver, allows the car to take full control of all aspects of driving in slow-moving traffic at up to 60 kilometers per hour (37 miles per hour). However, the function works only on highways with a physical barrier separating one stream of traffic from oncoming traffic.

In level 4, similar automated control as in level 3, but no driver attention is required for safety. For example, the driver may safely go to sleep or leave the driver's seat. Level 4 may be referred to as "mind off" or "driverless." Self-driving in level 4 may be supported only in limited spatial areas (e.g. within geofenced areas) or under special circumstances, like traffic jams. Outside of these areas or circumstances, the vehicle may safely abort the trip (e.g. park the car) if the driver does not retake control.

In level 5, no human intervention is required to drive the vehicle. As a result, a vehicle with level 5 driver assistance features may not require or have a steering wheel installed. An example would be a robotic taxi. Level 5 driver assistance may be referred to as "autonomous driving" because the vehicle may drive on a road without human intervention. In many cases, it is used as the same term as a driverless car, or a robotic car.

The following embodiments also relate to several technological fields including but not limited to navigation, autonomous driving, assisted driving, traffic applications, and other location-based systems. The following embodiments achieve advantages in each of these technologies because improved data for driving or navigation improves the accuracy of each of these technologies by allowing fine-tuned selections of the control of driving operations in different situations. In each of the technologies of navigation, autonomous driving, assisted driving, traffic applications, and other location-based systems, the number of users that can be adequately served is increased. In addition, users of navigation, autonomous driving, assisted driving, traffic applications, and other location-based systems are more willing to adopt these systems given the technological advances in accuracy.

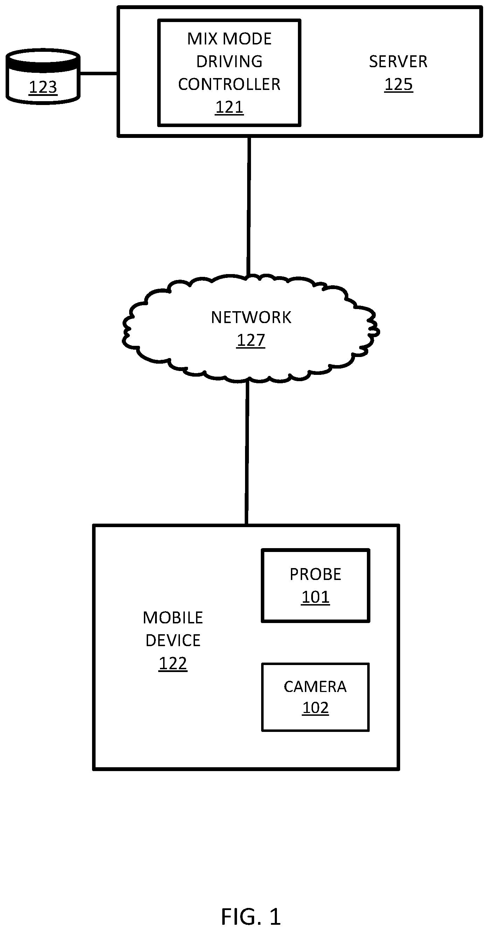

Figure 1 illustrates an example system for automated driving analysis and application including a mobile device 122, a server 125, and a network 127. Additional, different, or fewer components may be included in the system. The following embodiments may be entirely or substantially performed at the server 125, or the following embodiments may be entirely or substantially performed at the mobile device 122. In some examples, some aspects are performed at the mobile device 122 and other aspects are performed at the server 125.

The mobile device 122 may include a probe 101 or position circuitry such as one or more processors or circuits for generating probe data. The probe points are based on sequences of sensor measurements of the probe devices collected in the geographic region. The probe data may be generated by receiving global navigation satellite system (GNSS) signals and comparing the GNSS signals to a clock to determine the absolute or relative position of the mobile device 122. The probe data may be generated by receiving radio signals or wireless signals (e.g., cellular signals, the family of protocols known as WiFi or IEEE 802.11, the family of protocols known as Bluetooth, or another protocol) and comparing the signals to a pre-stored pattern of signals (e.g., radio map). The mobile device 122 may act as the probe 101 for determining the position or the mobile device 122 and the probe 101 may be separate devices.

The probe data may include a geographic location such as a longitude value and a latitude value. In addition, the probe data may include a height or altitude. The probe data may be collected over time and include timestamps. In some examples, the probe data is collected at a predetermined time interval (e.g., every second, every 100 milliseconds, or another interval). In this case, there are additional fields like speed and heading based on the movement (i.e., the probe reports location information when the probe 101 moves a threshold distance). The predetermined time interval for generating the probe data may be specified by an application or by the user. The interval for providing the probe data from the mobile device 122 to the server 125 may be the same or different than the interval for collecting the probe data. The interval may be specified by an application or by the user.

Communication between the mobile device 122 and the server 125 through the network 127 may use a variety of types of wireless networks. Some of the wireless networks may include radio frequency communication. Example wireless networks include cellular networks, the family of protocols known as WiFi or IEEE 802.11, the family of protocols known as Bluetooth, or another protocol. The cellular technologies may be analog advanced mobile phone system (AMPS), the global system for mobile communication (GSM), third generation partnership project (3GPP), code division multiple access (CDMA), personal handy-phone system (PHS), and 4G or long term evolution (LTE) standards, 5G, DSRC (dedicated short range communication), or another protocol.

Communication between multiple vehicles or multiple mobile devices 122 through the network 127 may also be implemented by any of these wireless networks. In some examples, the multiple vehicles or multiple mobile devices 122 exchange the mixed mode status of their respective vehicles. The mixed mode status may indicate whether or not a vehicle is performing a mixed mode where operation of the vehicle is shared between manual control and computer control. The mixed mode status may indicate the individual driving operations and whether each is applied to manual control or computer control. When the configuration of human versus operation is shared with nearby vehicles, other vehicles in the vicinity are aware that this candidate vehicles is partially operated by human and partially by machine. Nearby vehicles could then plan for known inconsistencies with simultaneous mix mode vehicles. For example, nearby vehicles may keep a greater distance when certain driving operations are performed by manual control and shorter distance when certain driving operations are performed by computer control.

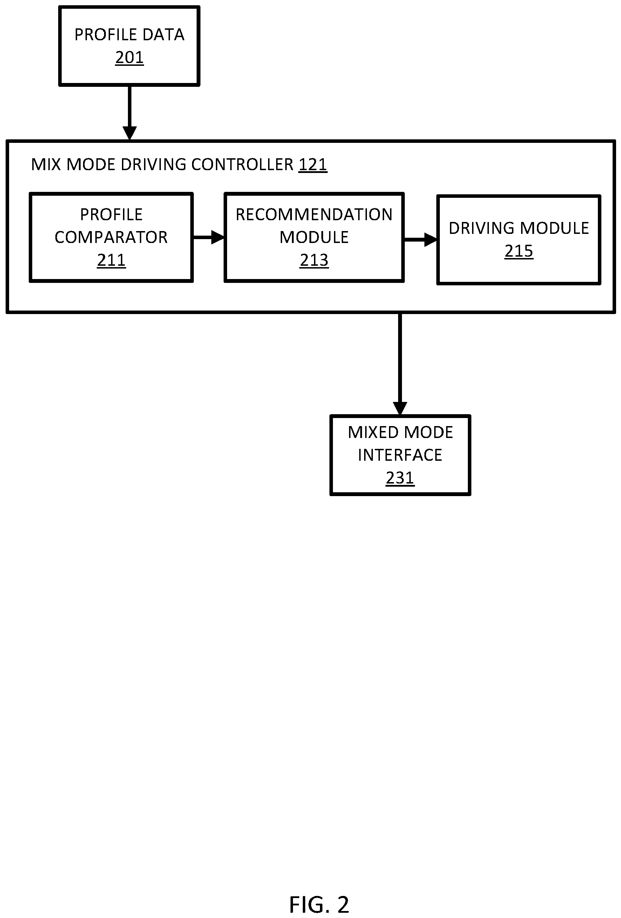

Figure 2 illustrates a first embodiment of a mix mode driving controller 121 for the system of Figure 1. While Figure 1 illustrates the mix mode driving controller 121 at server 125, the mobile device 122 may also implement the mix mode driving controller 121. The mix mode driving controller 121 may include a profile comparator 211, a recommendation module 213, and a driving module 215. Additional, different, or fewer components may be included.

The mix mode driving controller 121 may include a memory that includes profile data 201. The profile data 201 includes one or more characteristics of the users and/or entities involved with an automated driving trip. The term "automated driving trip" includes autonomous driving trips or assisted driving trips and other degrees therebetween. The profile comparator 211 accesses the profile data 201 associated with the automated driving trip. The profile data 201 may be accessed from memory or be requested from an external source. The profile comparator 211 may filter the profile data and identify one or more characteristics or properties described below for defining the list of driving operations that will be analyzed according to the profile data 201.

The recommendation module 213 receives the profile data 201 and provides a recommendation for the automated driving trip based on the profile data 201. That is, the one or more characteristics of the users and/or entities involved with the automated driving trip may impact whether a particular driving operation is recommended to have computer control or manual control. In some instances, the driver's characteristic in the profile data 201 may indicate that the driver is skilled at braking (e.g., the driver has a low reaction time and high eye-hand coordination), which causes the recommendation to include manual operation for braking. In some instances, the vehicle's characteristic may include a particular quantity or type of sensors, which causes the recommendation to include computer operation for braking. For example, when the vehicle includes proximity sensors, the recommendation module 213 may recommend that the vehicle perform braking.

In some instances, the driver's characteristic in the profile data 201 may indicate that the driver prefers to drive at a speed different than the posted speed limits, which causes the recommendation to include manual operation for acceleration. In some instance, the profile data 201 may indicate that the vehicle is configured to follow the posted speed limits or a percentage thereof, which causes the recommendation to include computer operation for acceleration. It may be a requirement of an insurance policy on the vehicle, an employment agreement of the driver of the vehicle, or a lease/sale of the vehicle that the computer operation be used for acceleration, or another specified driving operation. Various characteristics in the profile data 151 may impact the recommendation for various driving operations.

The recommendation module 213 may determine a list of driving operations for the automated driving trip. The list of possible driving operations may be a predetermined list or the list may be determined according to the trip. The predetermined list of driving operations may be specific to the vehicle or the user. The predetermined list of driving operations may be those driving operations that could be performed by a computer depending on the trip. For example, certain types of roads may not be suitable for autonomous driving. Downtown, congested, or other types of driving may not be included in certain locations. Similarly, certain road geometries may not be suitable for autonomous driving. For example, certain curvatures, tunnels, may not be accurately traversed using fully autonomous driving.

The profile data 201 includes compatibility data or corresponding profile for the first driving operation and the second driving operation. The compatibility data defines certain driving operations that are designated as manual operation or computer operation in groups. For example, the left turn signal and right turn signal may be grouped together so that both driving operations are either manual control or computer control. As another example, acceleration and braking may be grouped together so that both driving operations are either manual control or computer control. The recommendation module 213 determines a list of driving operations for the automated driving trip based on the compatibility data.

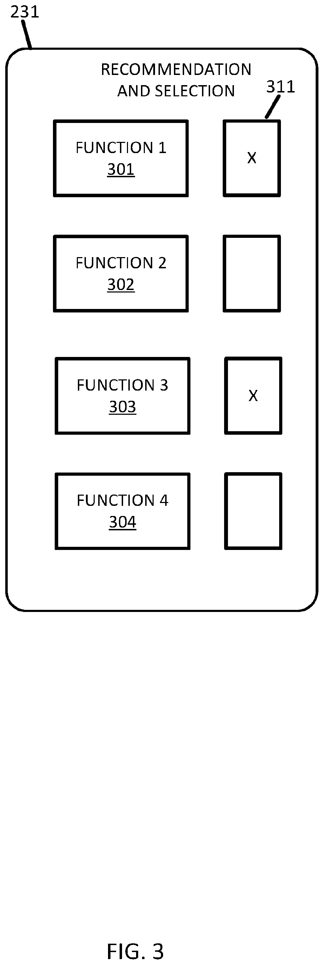

The mix mode driving controller 121 may interact with one or more users using the mixed mode interface 231. The mixed mode interface 231 may be included in a mobile device such as a phone or a device integrated with the vehicle. Figure 3 illustrates an example mixed mode recommendation on an example mixed mode interface 231, which may be a recommendation and selection interface. The mixed mode interface 231 may include multiple driving operation indicators (Function 1 301, Function 2 302, Function 3 303, Function 4 304, etc.), where each "Function" includes a textual or graphical symbol that indicates the driving operation. Each driving operation may be paired or otherwise associated with a selector 311. The selector may be configurable with a first value (e.g., checked) for manual operation and a second value (e.g., unchecked) for computer operation.

The mixed mode interface 231 allows the user to select one or more driving operations from the list to be applied to computer control and one or more driving operations from the list to be applied to manual control. The mix mode driving controller 121 may send the list to a mobile device with one or more selectable indicators for the one or more driving operations. The recommendations defined by the recommendation module 213 may be presented with the list. For example, the recommendation may be a pre-filled selection on the one or more selectable indicators.

The user may provide input to the mixed mode interface 231 to either accept or modify the recommendations presented by the mix mode driving controller 121. For example, when the recommendation includes manual operation for braking and computer operation for steering, the user may de-select either setting. The user may switch both operations to manual control or switch both operations to computer control.

The driving module 215 receives the selections provided to the mixed mode interface 231 and implements the computer controlled operations as modified or approved by the user. The driving module 215 may generate commands for the vehicle (e.g., steering commands, braking commands) according to the operations assigned to computer operation. The driving module 215 may also provide indicators to the user for manual operation. For example, the driving module 215 may activate manual control in response to confirmations made outside of the mixed mode interface 231 (e.g., audible commands, mechanical switches on the vehicle).

In addition to the mixed mode interface 231, the vehicle may provide recommendations or reminders to the user through one or more indicators or lights (e.g., green lights) on or near the instruments or controls of the vehicle. For example, a light may be placed to illuminate the steering wheel, the brake, the accelerator, or others. The lights may communicate the recommendation to the user. That is, the recommendations on the mixed mode interface 231 may be paired with lights illuminating the corresponding devices in the vehicle. The lights may communicate reminders to the user. That is, after the selections for mixed mode operation have been made by the user, the lights may illuminate the devices in the vehicle corresponding to the one or more driving operations selected by the user for manual operation. In one example, the devices for driving operations selected for manual operation are illuminated with a first color (e.g., green) and the devices for driving operations selected for computer operation are illuminated with a second color (e.g., red).

The mix mode driving controller 121 may be configured to adjust reaction times according to the recommendation for the driving operations or selections of the driving operation. In order for the computer and the human user to cooperate, one or more reaction times may be adjusted. For the simultaneous mix mode vehicles to drive normally, the reaction time of the human operator and the reaction time of vehicle should be aligned. Consider an example where the steering operation is performed by computer control and the braking operation is performed by the user. When an obstacle is detected, and both the computer control and the user should react, it could be problematic if the steering operation is performed immediately (e.g., in a few milliseconds) and the braking operation is not performed for a longer period of time (e.g., hundreds of milliseconds to 1 or 2 seconds), which is typical or appropriate for the user. In this situation, a skid could result. The reaction time of the human operator is ascertained by allowing the driver to manually enter the reaction time, determined from an online driving profile of the human operator, or determined automatically via a series of action/reaction evaluations onboard the vehicle when the human operator boards the vehicle. The mix mode driving controller 121 may also determine and confirm that the agreed reaction times are below the legal threshold.

The recommendation module 213 may update the profile data 201 based on user inputs received at the mixed mode interface 231. For example, the recommendation module 213 may recommend a set of operations for the user to perform based on historical selections. The user may override the recommended operations and the recommendation module 213 would self-learn and use this information to make better recommendations the next time. That is, the recommendation module 213 may receiver user inputs that override a recommendation and store those user inputs as user inputs. Alternatively, the recommendation module 213 may update the profile data 201 in light of the user inputs that override the recommendation.

In an example, the recommendation module 213 recommends that the user controls steering, acceleration, and the left turn signal. The user may override and unselect the left turn signal. Thus, the user agrees to perform only two operations, which are steering and acceleration while the computer operation operates the brake, horn, left and right turn signal. The recommendation module 213 modifies the profile data 201 to indicate that the user prefers to not to operate the left turn signal or prefers only to operate steering and acceleration.

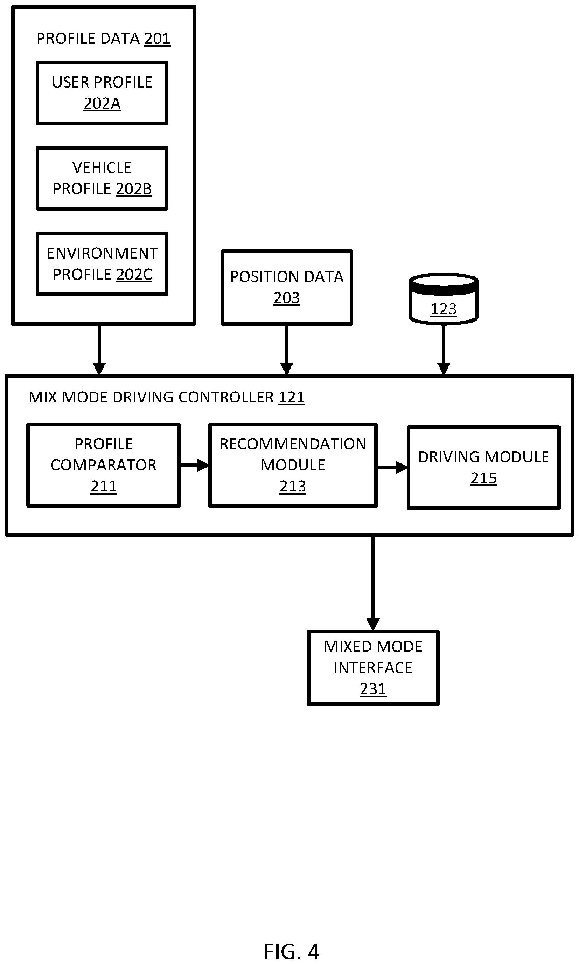

Figure 4 illustrates a second embodiment of a mixed mode driving controller for the system of Figure 1. The second embodiment includes additional inputs for providing recommendation for the automated driving trip. For example, the profile data 201 may have multiple components including, but not limited to, a user profile 202A, a vehicle profile 202B, and an environmental profile 202C. In addition or in the alternative to the profile data 201, inputs to the recommendation process may include position data 203 and/or map data from the geographic database 123. Additional, different, or fewer components may be included.

The user profile 202A may include one or more of a historical component, a performance component, and/or a dynamic component. The historical component of the user profile 202A may include historic selections of the user. The mix mode driving controller 121 may record how often the user selects to retain control of each driving operation over time. The mix mode driving controller 121 may determine, for future automated trips, whether each of the driving operations are more often or not (or more often than a certain threshold) performed by the user. The mix mode driving controller 121 may compare the historical component of the user profile 202A to determine whether certain operations are recommended to be performed by the user.

The performance component of the user profile 202A may include a rating of how well the user has performed with specific driving operations in the past. For example, the mix mode driving controller 121 may record the operations performed by the user. The mix mode driving controller 121 may compare operations performed by manual operations to what would have been performed by computer operation. For example, the sensors of the vehicle may detect obstacles and the driving module 215 calculate steering corrections in response to those detections even those the user is performing steering. The mix mode driving controller 121 may compare the steering adjustment that would have been made by the driving module 215 to the steering adjustment performed by the user. The mix mode driving controller 121 may compare the time delay before the steering adjustment is made to the time delay that would have been required by the driving module 215. The mix mode driving controller 121 may rate the difference determined by one or more of these types of comparison as the performance component of the user profile 202A. The mix mode driving controller 121 may compare the performance component of the user profile 202A to determine whether certain operations are recommended to be performed by the user.

The dynamic component of the user profile 202A may include one or more other individual factors of the user. The dynamic component may indicate whether the user has been awake for a certain amount of time. The dynamic component may indicate whether the user has visited certain risky locations (e.g., a bar where alcohol is served). The dynamic component may indicate whether the user's calendar indicates any distractions such as phone calls or meetings. The mix mode driving controller 121 may rate these types of indicators to a value for the dynamic component of the user profile 202A. The mix mode driving controller 121 may compare the dynamic component of the user profile 202A to determine whether certain operations are recommended to be performed by the user.

The vehicle profile 202B may include any one or a combination of a historical component, a performance component, and/or an organizational component. The historical component of the vehicle profile 202B may include a value derived from past selections made for a specific vehicle or mobile device. The mix mode driving controller 121 may record how often particular selections for manual control or computer control have been made for the vehicle or mobile device over time. The mix mode driving controller 121 may determine, for future automated trips, whether each of the driving operations are more often or not (or more often than a certain threshold) performed by the user. The mix mode driving controller 121 may compare the historical component of the vehicle profile 202B to determine whether certain operations are recommended to be performed by the user or automatically by the vehicle.

The performance component of the vehicle profile 202B may include a rating of how well the vehicle systems have performed with specific driving operations in the past. For example, the mix mode driving controller 121 may record the operations performed by the driving module 215. The mix mode driving controller 121 may log when the user has intervened for the driving module 215. The mix mode driving controller 121 may log when the DM 121 has identified an error or malfunction with a driving operation. The mix mode driving controller 121 may calculate the performance component of the vehicle profile 202B based on one or more of these logs. The mix mode driving controller 121 may compare the performance component of the user profile 202A to determine whether certain operations are recommended to be performed by the user or by the driving module 215.

The organizational component of the vehicle profile 202B may include one or more data values that indicate pre-selected recommendation for an organization. The organization may be a manufacturer of the vehicle. The manufacturer may indicate certain driving operations that are recommended to be performed by the driving module 215 and vehicle systems. The organization may be a fleet enterprise (e.g., shipping delivery network of vehicles, taxi service network of vehicles). Through policies or settings specified by the fleet enterprise, certain driving operations may be required or preferred to be performed by the driving module 215 and vehicle systems.

The organizational component of the vehicle profile 202B may include one or more data values that indicate rules or regulations by a municipality or other government. For example, certain governments may only allow fully autonomous control or certain types of roads and/or restrict certain driving operations to specific areas. The mix mode driving controller 121 may receive regulation data from an external service (e.g., regulation server) in response to the location of the vehicle or an upcoming calculated route. The mix mode driving controller 121 may compare the regulations of the vehicle profile 202B to determine whether certain operations are recommended to be performed by the user or automatically by the vehicle.

The government rules may also dictate where the mixed mode vehicle can drive. To be allowed in a lane on the road designated for autonomous driving, a threshold of operations should be performed by the driving module 215. For example, the mix mode driving controller 121 may select a route according to the number of driving operations, or which driving operations are selected for computer control. The mix mode driving controller 121 may select a route that includes a road segment or lane of a road segment designated for autonomous control when the number of driving operations assigned for computer control exceeds a threshold. The threshold could be a percentage (e.g., 80% of the driving operations must be performed by the machine in order to select the preferred route). For another example, it could be based on core features where the braking and steering is controlled by the driving module 215. In another example, the mixed mode vehicles may be designated to a separate lane or route because of a potential for driving inconsistencies.

The environmental profile 202C may include a weather component. The weather component may include values that are weights applied to one or more driving operations in certain weather conditions. For example, braking may better be applied by the driving module 215 during rain or other precipitation. The mix mode driving controller 121 may compare the weather component of the vehicle profile 202B to a weather condition to determine whether certain operations are recommended to be performed by the user. The weather conditions may be sensed by the vehicle. Direct sensing for the weather condition may include a rain sensor or a camera that collects images that are analyzed to determine the weather. Indirect sensing for the weather condition may infer the weather condition based on a windshield wiper setting or a headlight sensor.

The environmental profile 202C may be accessed according to position data 203 and/or map data from the geographic database 123. The mix mode driving controller 121 may send a request to a weather service (e.g., weather server) based on the position data 203 detected by the probe 101. The mix mode driving controller 121 may first determine a current road segment or upcoming road segment from the geographic database 123. The mix mode driving controller 121 may send a request to the weather service based on the road segment. The weather service returns the current or upcoming weather condition.

In other examples, the mix mode driving controller 121 may determine the environment profile 202C for a route or a portion of the route. The mix mode driving controller 121 or otherwise at server 125 receives a routing request including at least a destination and calculates a route to the destination. The mix mode driving controller 121 accesses the profile data 201 in response to the calculated route according to any of the examples herein. The recommendation module 213 receives the profile data 201 and provides a recommendation for the automated driving trip based on the profile data 201.

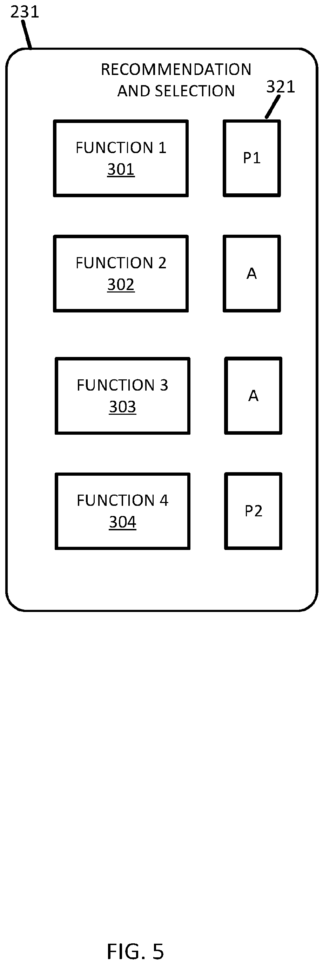

Figure 5 illustrates another example for the mixed mode interface 231 including a mixed mode recommendation for multiple passengers or drivers. In this example, the mixed mode interface 231 includes multiple driving operation indicators (Function 1 301, Function 2 302, Function 3 303, Function 4 304, etc.), where each "function" includes a textual or graphical symbol that indicates the driving operation. Each driving operation may be paired or otherwise associated with a selector 321. In this case, the selector 321 may be configurable with three or more values including a first value for manual operation for a first user (e.g., P1), a second value for manual operation for a second user (e.g., P2), and a third value (e.g., A) for computer operation.

Any of the examples for profile data 201 described herein may be applicable to multiple users. The recommendation module 213 may analyze profile data for multiple users to determine which user is recommended for each driving operation recommended for manual operation. Some users may be more skilled at certain operations than others. Some users may prefer to perform some driving operations. The driving operations may be applied according to seat in the vehicle. Steering or braking may be better performed by a passenger in the front see where visibility is higher. Turn signals may be better operated by users in the back seats where blind spots can be avoided.

For example, the user profile 202A may include properties for multiple user. The profile 202A may include a property of a primary user (e.g., driver seat passenger) and a property of a secondary user (e.g., any other passenger). The recommendation module 213 assigns one or more driving operations to the primary user and one or more driving operations to the secondary user based on the user profile 202A.

The driving operations may be assigned to specific users according to other factors. One factor may be schedule or calendar. The braking or steering operations may be switched from one user to another as their schedules permit them to provide attention to the driving operation. Another factor may be age. Non-critical operations such as turn signals or sunroof control may be assigned to children. Critical operations such as steering or braking may be assigned to primary passengers such as adults.

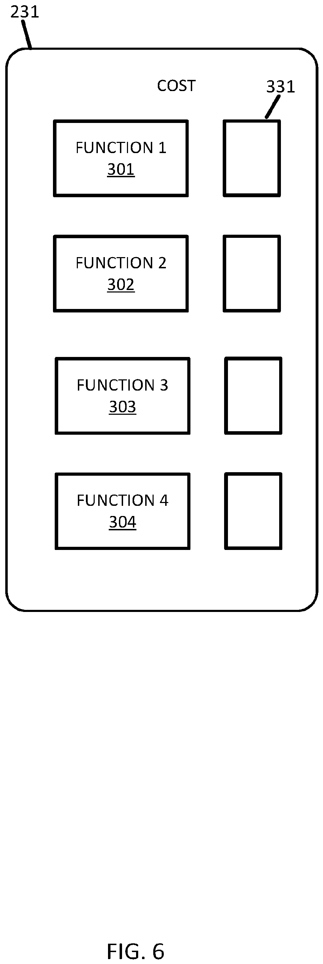

Figure 6 illustrates an example cost analysis for mixed mode driving. The mix mode driving controller 121 may also manage driving as a service for the vehicle. In driving as a service, one or more driving operations are available to passengers of the vehicle according to a cost schedule or a subscription service including a predetermined amount of services for a predetermined time period. In these systems, different driving operations may not be weighted equally. That is, certain driving operations may cost more or be designated a greater proportion of the amount of the available service through the subscription.

As shown in the mixed mode interface 231 of Figure 6, multiple driving operation indicators (Function 1 301, Function 2 302, Function 3 303, Function 4 304, etc.) may be displayed paired with a cost field 331. The cost field 331 may include a numeric value for each of the driving operation indicators for a cost of the driving operation. The cost field 331 may be combined the selector 311. For example, the selector may be configurable with a first value (e.g., zero or empty) for manual operation and a second value (e.g., the cost of the driving operation) for computer operation.

The mix mode driving controller 121 may be configured to calculate a first cost associated with the first driving operation designated to autonomous control. The cost may be a function of the types of roads on the trip (e.g., highways versus local roads) or the geometry of the trip (e.g., curvy roads versus straight roads). The cost may be a function of the weather. In other examples, each driving operation is associated with a predetermined cost, which is determined according to a lookup table accessed by the mix mode driving controller 121.

The cost to use the vehicle could be based on the cost per AV driving operation over a distance or duration. If the users selects only the steering operation and drove for 2 miles. Then the cost for using this simultaneous mix mode vehicle is a first cost. On the other hand, if the human operator selects steering and braking, then the cost of vehicle usage for 2 miles of travel is a second cost. The second cost is less than the first cost.

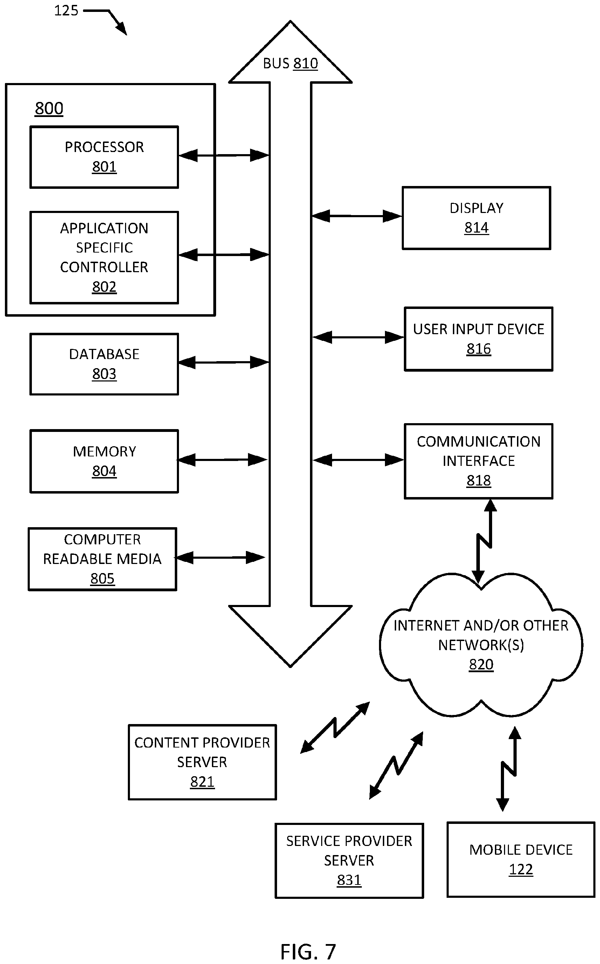

Figure 7 illustrates an example server 125 for the system of Figure 1. The server 125 may include a bus 810 that facilitates communication between a controller (e.g., the mixed mode driving controller 121) that may be implemented by a processor 801 and/or an application specific controller 802, which may be referred to individually or collectively as controller 800, and one or more other components including a database 803, a memory 804, a computer readable medium 805, a display 814, a user input device 816, and a communication interface 818 connected to the internet and/or other networks 820. The contents of database 803 are described with respect to database 123. The server-side database 803 may be a master database that provides data in portions to the database 903 of the mobile device 122. Additional, different, or fewer components may be included.

The memory 804 and/or the computer readable medium 805 may include a set of instructions that can be executed to cause the server 125 to perform any one or more of the methods or computer-based functions disclosed herein. In a networked deployment, the system of Figure 7 may alternatively operate or as a client user computer in a client-server user network environment, or as a peer computer system in a peer-to-peer (or distributed) network environment. It can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. While a single computer system is illustrated, the term "system" shall also be taken to include any collection of systems or sub-systems that individually or jointly execute a set, or multiple sets, of instructions to perform one or more computer functions.

The server 125 may be in communication through the network 820 with a content provider server 821 and/or a service provider server 831. The server 125 may provide the point cloud to the content provider server 821 and/or the service provider server 831. The content provider may include device manufacturers that provide location-based services associated with different locations POIs that users may access.

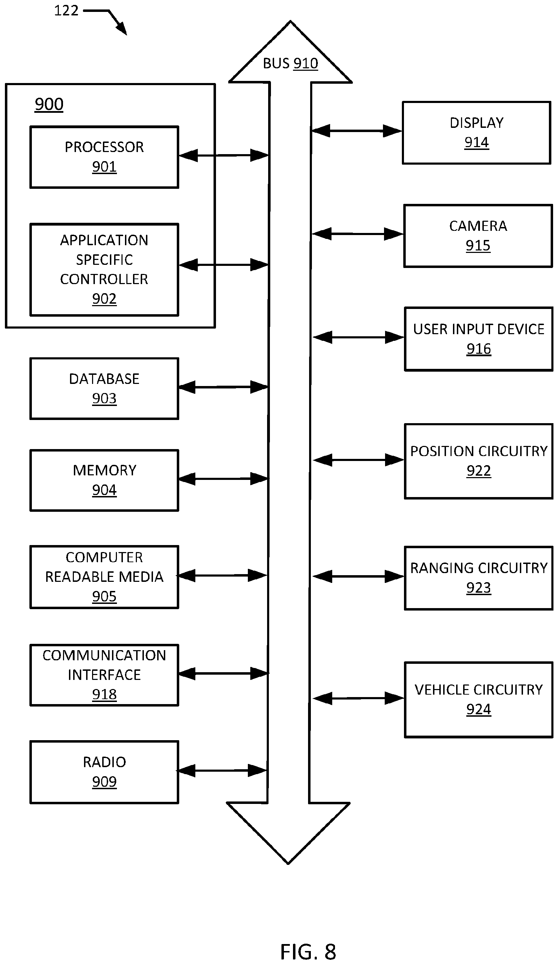

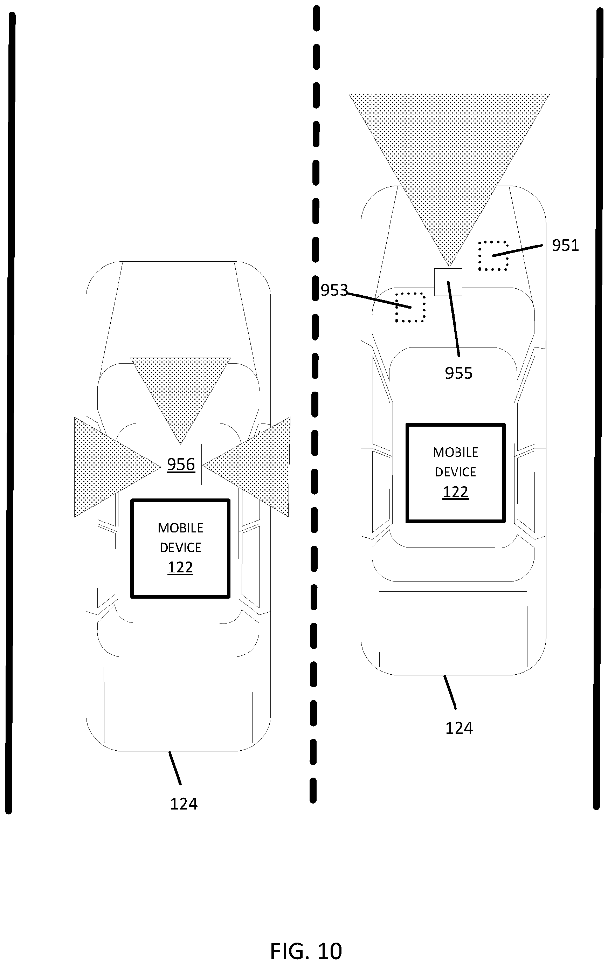

Figure 8 illustrates an example mobile device 122 for the system of Figure 1. The mobile device 122 may include a bus 910 that facilitates communication between a controller (e.g., the mix mode driving controller 121) that may be implemented by a processor 901 and/or an application specific controller 902, which may be referred to individually or collectively as controller 900, and one or more other components including a database 903, a memory 904, a computer readable medium 905, a communication interface 918, a radio 909, a display 914, a camera 915, a user input device 916, position circuitry 922, ranging circuitry 923, and vehicle circuitry 924. The contents of the database 903 are described with respect to database 123. The device-side database 903 may be a user database that receives data in portions from the database 903 of the mobile device 122. The communication interface 918 connected to the internet and/or other networks (e.g., network 820 shown in Figure 6). The vehicle circuitry 924 may include any of the circuitry and/or devices described with respect to Figure 10. Additional, different, or fewer components may be included.

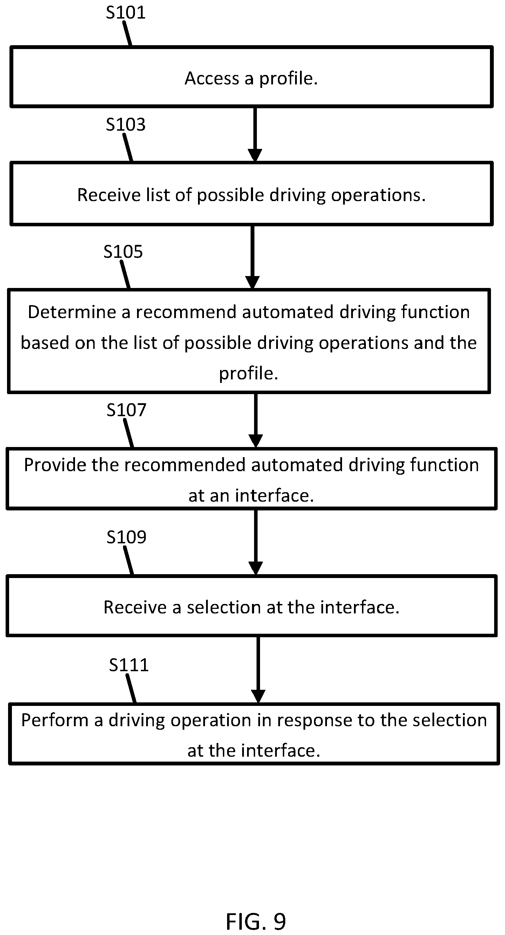

Figure 9 illustrates an example flow chart for the mobile device of Figure 8. Additional, different, or fewer acts may be included.

At act S101, the controller 900 accesses a profile. As described herein various profiles are possible. The profile may be a user profile. The controller 900 may determine a user identity, such as entry in the user input device 916 or a connection and handshake with a device of the user. The controller 900 may access the profile from the memory 904 based on the user identity.

The profile may be a vehicle profile. The controller 900 may determine a vehicle identity, such as entry in the user input device 916 or a connection and handshake with the vehicle. The vehicle identity may be stored for example by the memory 904. The controller 900 may access the profile from the memory 904 based on the vehicle identity.

The profile may be a trip profile. The controller 900 may receive position information determined by the position circuitry 922 or the ranging circuitry 923. The controller 900 may calculate a route based on position data for the current location and a destination received from the user input device 916. The controller 900 may determine the trip profile based on the route from the current location to the destination.

The profile may be an environment profile such as a weather profile. The controller 900 may request weather information, for example, from service provider server 831. The controller 900 may determine the environment profile in response to the weather information.

At act S103, the controller 900 receives a list of driving operations for an automated driving trip. The default list of possible driving operations may be specific to the type of driver or type of vehicle. The default list may be configurable by an administrator.

At act S105, the controller 900 determines at least one recommended driving operation included in the list of possible operations based on a profile. The at least one recommended driving operation includes a first driving operation designated to autonomous control and a second driving operation designated to manual control. At act S107, the controller 900 and/or the display 914, which may be combined with the user input device 916, provides the recommended driving operation to the user.

At act S109, the controller 900 receives a selection at the display 914, which may be combined with the user input device 916. The selection indicates whether each driving operation should be performed by computer control or manual control.

At act S111, the controller 900 performs a driving operation in response to the selection at the display 914 and/or the user input device 916. Examples of possible driving operations are described with respect to Figure 10.

Figure 10 illustrates an exemplary vehicle 124 associated with the system of Figure 1 for providing mixed mode automated driving systems. The vehicles 124 may include a variety of devices that collect position data as well as other related sensor data for the surroundings of the vehicle 124. The position data may be generated by a global positioning system, a dead reckoning-type system, cellular location system, or combinations of these or other systems, which may be referred to as position circuitry or a position detector. The positioning circuitry may include suitable sensing devices that measure the traveling distance, speed, direction, and so on, of the vehicle 124. The positioning system may also include a receiver and correlation chip to obtain a GPS or GNSS signal. Alternatively or additionally, the one or more detectors or sensors may include an accelerometer built or embedded into or within the interior of the vehicle 124. The vehicle 124 may include one or more distance data detection device or sensor, such as a LIDAR device. The distance data detection sensor may generate point cloud data. The distance data detection sensor may include a laser range finder that rotates a mirror directing a laser to the surroundings or vicinity of the collection vehicle on a roadway or another collection device on any type of pathway. The distance data detection device may generate the trajectory data. Other types of pathways may be substituted for the roadway in any embodiment described herein.

A connected vehicle includes a communication device and an environment sensor array for reporting the surroundings of the vehicle 124 to the server 125. The connected vehicle may include an integrated communication device coupled with an in-dash navigation system. The connected vehicle may include an ad-hoc communication device such as a mobile device 122 or smartphone in communication with a vehicle system. The communication device connects the vehicle to a network including at least one other vehicle and at least one server. The network may be the Internet or connected to the internet.

The sensor array may include one or more sensors configured to detect surroundings of the vehicle 124. The sensor array may include multiple sensors. Example sensors include an optical distance system such as LiDAR 956, an image capture system 955 such as a camera, a sound distance system such as sound navigation and ranging (SONAR), a radio distancing system such as radio detection and ranging (RADAR) or another sensor. The camera may be a visible spectrum camera, an infrared camera, an ultraviolet camera, or another camera.

In some alternatives, additional sensors may be included in the vehicle 124. An engine sensor 951 may include a throttle sensor that measures a position of a throttle of the engine or a position of an accelerator pedal, a brake senor that measures a position of a braking mechanism or a brake pedal, or a speed sensor that measures a speed of the engine or a speed of the vehicle wheels. Another additional example, vehicle sensor 953, may include a steering wheel angle sensor, a speedometer sensor, or a tachometer sensor.

A mobile device 122 may be integrated in the vehicle 124, which may include assisted driving vehicles such as autonomous vehicles, highly assisted driving (HAD), and advanced driving assistance systems (ADAS). Any of these assisted driving systems may be incorporated into mobile device 122. Alternatively, an assisted driving device may be included in the vehicle 124. The assisted driving device may include memory, a processor, and systems to communicate with the mobile device 122. The assisted driving vehicles may respond to the driving commands from the driving module 215 and based on map data received from geographic database 123 and the server 125.

Figure 10 illustrates components of a road segment data record 980 contained in the geographic database 123 according to one embodiment. The road segment data record 980 may include a segment ID 984(1) by which the data record can be identified in the geographic database 123. Each road segment data record 980 may have associated with it information (such as "attributes", "fields", etc.) that describes features of the represented road segment. The road segment data record 980 may include data 984(2) that indicate the restrictions, if any, on the direction of vehicular travel permitted on the represented road segment. The road segment data record 980 may include data 984(3) that indicate a speed limit or speed category (i.e., the maximum permitted vehicular speed of travel) on the represented road segment. The road segment data record 304 may also include classification data 984(4) indicating whether the represented road segment is part of a controlled access road (such as an expressway), a ramp to a controlled access road, a bridge, a tunnel, a toll road, a ferry, and so on. The road segment data record may include location fingerprint data, for example a set of sensor data for a particular location.

The geographic database 123 may include road segment data records 980 (or data entities) that describe automated driving recommendations characteristics 984(5) described herein. Additional schema may be used to describe road objects. The attribute data may be stored in relation to geographic coordinates (e.g., the latitude and longitude) of the end points of the represented road segment. In one embodiment, the data 984(7) are references to the node data records 986 that represent the nodes corresponding to the end points of the represented road segment.

The road segment data record 980 may also include or be associated with other data that refer to various other attributes of the represented road segment. The various attributes associated with a road segment may be included in a single road segment record or may be included in more than one type of record which cross-references to each other. For example, the road segment data record may include data identifying what turn restrictions exist at each of the nodes which correspond to intersections at the ends of the road portion represented by the road segment, the name, or names by which the represented road segment is identified, the street address ranges along the represented road segment, and so on.

The road segment data record 908 may also include endpoints 984(7) that reference one or more node data records 986(1) and 986(2) that may be contained in the geographic database 123. Each of the node data records 986 may have associated information (such as "attributes", "fields", etc.) that allows identification of the road segment(s) that connect to it and/or its geographic position (e.g., its latitude and longitude coordinates). The node data records 986(1) and 986(2) include the latitude and longitude coordinates 986(1)(1) and 986(2)(1) for their node, the node data records 986(1) and 986(2) may also include other data 986(1)(3) and 986(2)(3) that refer to various other attributes of the nodes. In one example, the node data records 986(1) and 986(2) include the latitude and longitude coordinates 986(1)(1) and 986(2)(1) and the other data 986(1)(3) and 986(2)(3) reference other data associated with the node such as recommendations for one or more driving operations at the node.

The controller 900 may communicate with a vehicle ECU which operates one or more driving mechanisms (e.g., accelerator, brakes, steering device). Alternatively, the mobile device 122 may be the vehicle ECU, which operates the one or more driving mechanisms directly.

The controller 800 or 900 may include a routing module including an application specific module or processor that calculates routing between an origin and destination. The routing module is an example means for generating a route in response to the anonymized data to the destination. The routing command may be a driving instruction (e.g., turn left, go straight), which may be presented to a driver or passenger, or sent to an assisted driving system. The display 914 is an example means for displaying the routing command. The mobile device 122 may generate a routing instruction based on the anonymized data.

The routing instructions may be provided by display 914. The mobile device 122 may be configured to execute routing algorithms to determine an optimum route to travel along a road network from an origin location to a destination location in a geographic region. Using input(s) including map matching values from the server 125, a mobile device 122 examines potential routes between the origin location and the destination location to determine the optimum route. The mobile device 122, which may be referred to as a navigation device, may then provide the end user with information about the optimum route in the form of guidance that identifies the maneuvers required to be taken by the end user to travel from the origin to the destination location. Some mobile devices 122 show detailed maps on displays outlining the route, the types of maneuvers to be taken at various locations along the route, locations of certain types of features, and so on. Possible routes may be calculated based on a Dijkstra method, an A-star algorithm or search, and/or other route exploration or calculation algorithms that may be modified to take into consideration assigned cost values of the underlying road segments.

The mobile device 122 may plan a route through a road system or modify a current route through a road system in response to the request for additional observations of the road object. For example, when the mobile device 122 determines that there are two or more alternatives for the optimum route and one of the routes passes the initial observation point, the mobile device 122 selects the alternative that passes the initial observation point. The mobile devices 122 may compare the optimal route to the closest route that passes the initial observation point. In response, the mobile device 122 may modify the optimal route to pass the initial observation point.

The mobile device 122 may be a personal navigation device ("PND"), a portable navigation device, a mobile phone, a personal digital assistant ("PDA"), a watch, a tablet computer, a notebook computer, and/or any other known or later developed mobile device or personal computer. The mobile device 122 may also be an automobile head unit, infotainment system, and/or any other known or later developed automotive navigation system. Non-limiting embodiments of navigation devices may also include relational database service devices, mobile phone devices, car navigation devices, and navigation devices used for air or water travel.

The geographic database 123 may include map data representing a road network or system including road segment data and node data. The road segment data represent roads, and the node data represent the ends or intersections of the roads. The road segment data and the node data indicate the location of the roads and intersections as well as various attributes of the roads and intersections. Other formats than road segments and nodes may be used for the map data. The map data may include structured cartographic data or pedestrian routes. The map data may include map features that describe the attributes of the roads and intersections. The map features may include geometric features, restrictions for traveling the roads or intersections, roadway features, or other characteristics of the map that affects how vehicles 124 or mobile device 122 for through a geographic area. The geometric features may include curvature, slope, or other features. The curvature of a road segment describes a radius of a circle that in part would have the same path as the road segment. The slope of a road segment describes the difference between the starting elevation and ending elevation of the road segment. The slope of the road segment may be described as the rise over the run or as an angle. The geographic database 123 may also include other attributes of or about the roads such as, for example, geographic coordinates, street names, address ranges, speed limits, turn restrictions at intersections, and/or other navigation related attributes (e.g., one or more of the road segments is part of a highway or toll way, the location of stop signs and/or stoplights along the road segments), as well as points of interest (POIs), such as gasoline stations, hotels, restaurants, museums, stadiums, offices, automobile dealerships, auto repair shops, buildings, stores, parks, etc. The databases may also contain one or more node data record(s) which may be associated with attributes (e.g., about the intersections) such as, for example, geographic coordinates, street names, address ranges, speed limits, turn restrictions at intersections, and other navigation related attributes, as well as POIs such as, for example, gasoline stations, hotels, restaurants, museums, stadiums, offices, automobile dealerships, auto repair shops, buildings, stores, parks, etc. The geographic data may additionally or alternatively include other data records such as, for example, POI data records, topographical data records, cartographic data records, routing data, and maneuver data.

The geographic database 123 may contain at least one road segment database record 304 (also referred to as "entity" or "entry") for each road segment in a particular geographic region. The geographic database 123 may also include a node database record (or "entity" or "entry") for each node in a particular geographic region. The terms "nodes" and "segments" represent only one terminology for describing these physical geographic features, and other terminology for describing these features is intended to be encompassed within the scope of these concepts. The geographic database 123 may also include location fingerprint data for specific locations in a particular geographic region.

The radio 909 may be configured to radio frequency communication (e.g., generate, transit, and receive radio signals) for any of the wireless networks described herein including cellular networks, the family of protocols known as WiFi or IEEE 802.11, the family of protocols known as Bluetooth, or another protocol.

The memory 804 and/or memory 904 may be a volatile memory or a non-volatile memory. The memory 804 and/or memory 904 may include one or more of a read only memory (ROM), random access memory (RAM), a flash memory, an electronic erasable program read only memory (EEPROM), or other type of memory. The memory 904 may be removable from the mobile device 122, such as a secure digital (SD) memory card.

The communication interface 818 and/or communication interface 918 may include any operable connection. An operable connection may be one in which signals, physical communications, and/or logical communications may be sent and/or received. An operable connection may include a physical interface, an electrical interface, and/or a data interface. The communication interface 818 and/or communication interface 918 provides for wireless and/or wired communications in any now known or later developed format.

The input device 916 may be one or more buttons, keypad, keyboard, mouse, stylus pen, trackball, rocker switch, touch pad, voice recognition circuit, or other device or component for inputting data to the mobile device 122. The input device 916 and display 914 be combined as a touch screen, which may be capacitive or resistive. The display 914 may be a liquid crystal display (LCD) panel, light emitting diode (LED) screen, thin film transistor screen, or another type of display. The output interface of the display 914 may also include audio capabilities, or speakers. In an embodiment, the input device 916 may involve a device having velocity detecting abilities.

The ranging circuitry 923 may include a LIDAR system, a RADAR system, a structured light camera system, SONAR, or any device configured to detect the range or distance to objects from the mobile device 122.

The positioning circuitry 922 may include suitable sensing devices that measure the traveling distance, speed, direction, and so on, of the mobile device 122. The positioning system may also include a receiver and correlation chip to obtain a GPS signal. Alternatively or additionally, the one or more detectors or sensors may include an accelerometer and/or a magnetic sensor built or embedded into or within the interior of the mobile device 122. The accelerometer is operable to detect, recognize, or measure the rate of change of translational and/or rotational movement of the mobile device 122. The magnetic sensor, or a compass, is configured to generate data indicative of a heading of the mobile device 122. Data from the accelerometer and the magnetic sensor may indicate orientation of the mobile device 122. The mobile device 122 receives location data from the positioning system. The location data indicates the location of the mobile device 122.

The positioning circuitry 922 may include a Global Positioning System (GPS), Global Navigation Satellite System (GLONASS), or a cellular or similar position sensor for providing location data. The positioning system may utilize GPS-type technology, a dead reckoning-type system, cellular location, or combinations of these or other systems. The positioning circuitry 922 may include suitable sensing devices that measure the traveling distance, speed, direction, and so on, of the mobile device 122. The positioning system may also include a receiver and correlation chip to obtain a GPS signal. The mobile device 122 receives location data from the positioning system. The location data indicates the location of the mobile device 122.

The position circuitry 922 may also include gyroscopes, accelerometers, magnetometers, or any other device for tracking or determining movement of a mobile device. The gyroscope is operable to detect, recognize, or measure the current orientation, or changes in orientation, of a mobile device. Gyroscope orientation change detection may operate as a measure of yaw, pitch, or roll of the mobile device.

In accordance with various embodiments of the present invention, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated
to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this specification, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this specification, including in any claims. As a further example, as used in this specification, the term "circuitry"
would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network devices.

Processors suitable for the execution of a computer program include, by way of example, both general and special purpose microprocessors, and anyone or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry. In an embodiment, a vehicle may be considered a mobile device, or the mobile device may be integrated into a vehicle.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The term "computer-readable medium" includes a single medium or multiple media, such as a centralized or distributed database, and/or associated caches and servers that store one or more sets of instructions. The term "computer-readable medium" shall also include any medium that is capable of storing, encoding, or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e- mail or other self-contained information archive or set of archives may be considered a distribution medium that is a tangible storage medium. Accordingly, the invention is considered to include any one or more of a computer-readable medium or a distribution medium and other equivalents and successor media, in which data or instructions may be stored. These examples may be collectively referred to as a non-transitory computer readable medium.

**In** an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit.

Embodiments of the subject matter described in this specification can be implemented in a computing system that includes a back end component, e.g., as a data server, or that includes a middleware component, e.g., an application server, or that includes a front end component, e.g., a client computer having a graphical user interface or
a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the invention. Other embodiments may be utilized and derived from the invention, such that structural and logical substitutions and changes may be made without departing from the scope of the invention. Additionally, the illustrations are merely representational and may not be drawn to scale. Certain proportions within the illustrations may be exaggerated, while other proportions may be minimized. Accordingly, the invention and the figures are to be regarded as illustrative rather than restrictive.

While this specification contains many specifics, these should not be construed as limitations on the scope of the invention as claimed, but rather as descriptions of features specific to particular embodiments of the invention.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments.

This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

## Claims

1. A computer-implemented method for mixed mode automated driving, wherein mixed mode driving comprises recommending driving operations including a first driving operation designated to autonomous control (321) and a second driving operation designated to manual control, the method comprising:
accessing a profile (201) associated with an automated driving trip;
determining a list of driving operations for the automated driving trip; and
determining, based on the profile, recommended driving operations (311) included in the list of operations,
wherein the profile includes compatibility data for the first driving operation and the second driving operation, the compatibility data defining groups of compatible driving operations where driving operations in groups are designated to either manual or autonomous control.

2. The method of claim 1, wherein the profile includes one or more of:
a driver profile (202A) including a property of a primary user associated with the automated driving trip;
a passenger profile including a property of a secondary user associated with the automated driving trip;
a vehicle profile (202B) including historical data or a property of a vehicle associated with the automated driving trip;
an environment profile (202C) including an ambient condition or historical environment data; and
a route profile include at least one road segment profile or historical route data.

3. The method of claim 1, further comprising:
receiving a routing request including at least a destination; and
calculating a route to the destination, wherein the profile is accessed according to the calculated route.

4. The method of claim 3, further comprising:
receiving regulation data in response to the calculated route, wherein the recommended driving operations are selected based on the regulation data.

5. The method of claim 1, further comprising:
calculating a reaction time adjustment for the first driving operation or the second driving operation.

6. The method of claim 1, further comprising:
calculating a first cost associated with the first driving operation designated to autonomous control.

7. The method of claim 1, further comprising:
displaying the driving recommendation on a mixed mode interface.

8. An apparatus for mixed mode automated driving, wherein mixed mode driving comprises recommending driving operations including a first driving operation designated to autonomous control and a second driving operation designated to manual control, the apparatus comprising data processing means including:
a profile comparator configured to select at least one characteristic from profile data associated with an automated driving trip;
a recommendation module configured to determine, based on the characteristic from the profile, recommended driving operations included in a list of possible operations,
wherein the characteristics from the profile include compatibility data for the first driving operation and the second driving operation,
the compatibility data defining groups of compatible driving operations, where driving operations in groups are designated to either manual or autonomous control; and
a mixed mode interface configured to receive modifications of the recommended driving operations to adjust the designated autonomous control or the designated manual control.

9. The apparatus of claim 8, wherein the apparatus further comprises a controller configured to calculate a first cost associated with the first driving operation designated to autonomous control, and wherein the mixed mode interface displays the first cost paired with the recommended first driving operation.

10. A non-transitory computer readable medium including instructions, for mixed mode automated driving wherein mixed mode driving comprises recommending driving operations including a first driving operation designated to autonomous control (321) and a second driving operation designated to manual control, that when executed by a processor, are configured to cause the processor to perform:
accessing a profile (201) associated with an automated driving trip;
determining a list of driving operations for the automated driving trip; and
determining, based on the profile, recommended driving operations included in the list of operations,
wherein the profile includes compatibility data for the first driving operation and the second driving operation,
the compatibility data defining groups of driving operations, where driving operations in groups are designated to either manual or autonomous control.

11. The non-transitory computer readable medium of claim 10, the instructions further configured to cause the processor to perform:
receiving position data; and
accessing the profile based on the position data.

12. The non-transitory computer readable medium of claim 10, the instructions further configured to cause the processor to perform:
determining a user identity; and
accessing the profile based on the user identity.

13. The non-transitory computer readable medium of claim 10, the instructions further configured to cause the processor to perform:
receiving a vehicle identifier; and
accessing the profile based on the vehicle identifier.

14. The non-transitory computer readable medium of claim 10, the instructions further configured to cause the processor to perform:
receiving weather information; and
accessing the profile based on the weather information.

## Patentansprüche

1. Computerimplementiertes Verfahren für automatisiertes Fahren in gemischten Betriebsarten, wobei das Fahren in gemischten Betriebsarten das Empfehlen von Fahrvorgängen umfasst, die einen ersten, der autonomen Steuerung (321) entworfenen Fahrvorgang und einen zweiten, der manuellen Steuerung entworfenen Fahrvorgang einschließen, das Verfahren umfassend:
Zugreifen auf ein Profil (201), das mit einer automatisierten Fahrt verbunden ist;
Bestimmen einer Liste von Fahrvorgängen für die automatisierte Fahrt; und
Bestimmen, basierend auf dem Profil, empfohlener Fahrvorgänge (311), die in der Liste der Vorgänge eingeschlossen sind,
wobei das Profil Kompatibilitätsdaten für den ersten Fahrvorgang und den zweiten Fahrvorgang einschließt,
wobei die Kompatibilitätsdaten Gruppen von kompatiblen Fahrvorgängen definieren, wobei die Fahrvorgänge in den Gruppen entweder der manuellen oder der autonomen Steuerung entwerfen sind.

2. Verfahren nach Anspruch 1, wobei das Profil eines oder mehrere der Folgenden einschließt:
ein Fahrerprofil (202A), das eine Eigenschaft eines primären Benutzers einschließt, der mit der automatisierten Fahrt verbunden ist;
ein Fahrgastprofil, das eine Eigenschaft eines zweiten Benutzers einschließt, der mit der automatisierten Fahrt verbunden ist;
ein Fahrzeugprofil (202B), das historische Daten oder eine Eigenschaft eines mit der automatisierten Fahrt verbundenen Fahrzeugs einschließt;
ein Umgebungsprofil (202C), das eine Umgebungsbedingung oder historische Umgebungsdaten einschließt; und
ein Streckenprofil, das mindestens ein Straßensegmentprofil oder historische Streckendaten einschließt.

3. Verfahren nach Anspruch 1, ferner umfassend:
Empfangen einer Weiterleitungsanfrage, die mindestens ein Ziel einschließt; und
Berechnen einer Strecke zum Ziel, wobei der Zugriff auf das Profil nach der berechneten Strecke erfolgt.

4. Verfahren nach Anspruch 3, ferner umfassend:
Empfangen von Regelungsdaten in Reaktion auf die berechnete Strecke, wobei die empfohlenen Fahrvorgänge basierend auf den Regelungsdaten ausgewählt werden.

5. Verfahren nach Anspruch 1, ferner umfassend:
Berechnen einer Reaktionszeitanpassung für den ersten Fahrvorgang oder den zweiten Fahrvorgang.

6. Verfahren nach Anspruch 1, ferner umfassend:
Berechnen der ersten Kosten, die mit dem ersten, der autonomen Steuerung entworfenen Fahrvorgang verbunden sind.

7. Verfahren nach Anspruch 1, ferner umfassend:
Anzeigen der Fahrempfehlung auf einer Schnittstelle für gemischte Betriebsarten.

8. Gerät für automatisiertes Fahren mit gemischten Betriebsarten, wobei das Fahren mit gemischten Betriebsarten das Empfehlen von Fahrvorgängen umfasst, einschließlich eines ersten, der autonomen Steuerung entworfenen Fahrvorgangs und eines zweiten, der manuellen Steuerung entworfenen Fahrvorgangs, wobei das Gerät ein Datenverarbeitungsmittel umfasst, einschließend:
einen Profilvergleicher, der so konfiguriert ist, dass er mindestens eine Eigenschaft aus Profildaten auswählt, die mit einer automatisierten Fahrt verbunden sind;
ein Empfehlungsmodul, das so konfiguriert ist, dass es basierend auf der Eigenschaft des Profils die empfohlenen Fahrvorgänge bestimmt, die in eine Liste möglicher Vorgänge eingeschlossen sind,
wobei die Eigenschaften des Profils die Kompatibilitätsdaten für den ersten Fahrbetrieb und den zweiten Fahrbetrieb einschließen,
die Kompatibilitätsdaten, die Gruppen von kompatiblen Fahrvorgängen definieren, wobei die Fahrvorgänge in den Gruppen entweder der manuellen oder der autonomen Steuerung entwerfen; und
eine Schnittstelle für gemischte Betriebsarten, die so konfiguriert ist, dass sie Änderungen der empfohlenen Fahrvorgänge empfängt, um die entworfene autonome Steuerung oder die entworfene manuelle Steuerung anzupassen.

9. Gerät nach Anspruch 8, wobei das Gerät ferner eine Steuerung umfasst, die so konfiguriert ist, dass sie erste Kosten berechnet, die mit dem ersten, der autonomen Steuerung entworfenen Fahrbetrieb verbunden sind, und wobei die Schnittstelle für gemischte Betriebsarten die ersten Kosten anzeigt, die mit dem empfohlenen ersten Fahrbetrieb verbunden sind.

10. Nicht-transitorisches, computerlesbares Medium, das Anweisungen für automatisiertes Fahren in gemischten Betriebsarten umfasst, wobei das Fahren in gemischten Betriebsarten das Empfehlen von Fahrvorgängen umfasst, einschließlich eines ersten Fahrvorgangs, der zur autonomen Steuerung (321) entwerfen ist, und eines zweiten Fahrvorgangs, der zur manuellen Steuerung entwerfen ist, die, wenn sie von einem Prozessor ausgeführt werden, so konfiguriert sind, dass sie den Prozessor veranlassen, Folgendes durchzuführen:
Zugreifen auf ein Profil (201), das mit einer automatisierten Fahrt verbunden ist;
Bestimmen einer Liste von Fahrvorgängen für die automatisierte Fahrt; und
Bestimmen, basierend auf dem Profil, der empfohlenen Fahrvorgänge, die in die Liste der Vorgänge eingeschlossen sind,
wobei das Profil die Kompatibilitätsdaten für den ersten Fahrbetrieb und den zweiten Fahrbetrieb einschließt,
die Kompatibilitätsdaten, die Gruppen von Fahrvorgängen definieren, wobei die Fahrvorgänge in den Gruppen entweder der manuellen oder der autonomen Steuerung entworfen werden.

11. Nicht-transitorisches computerlesbares Medium nach Anspruch 10, wobei die Anweisungen ferner konfiguriert sind, um den Prozessor zu veranlassen, Folgendes durchzuführen:
Empfangen von Positionierungsdaten; und
Zugreifen auf das auf den Positionsdaten basierende Profil.

12. Nicht-transitorisches computerlesbares Medium nach Anspruch 10, wobei die Anweisungen ferner konfiguriert sind, um den Prozessor zu veranlassen, Folgendes durchzuführen:
Bestimmen der Benutzeridentität; und
Zugreifen auf das Profil basierend auf der Benutzeridentität.

13. Nicht-transitorisches computerlesbares Medium nach Anspruch 10, wobei die Anweisungen ferner konfiguriert sind, um den Prozessor zu veranlassen, Folgendes durchzuführen:
Empfangen einer Fahrzeugkennung; und
Zugreifen auf das Profil basierend auf der Fahrzeugkennung.

14. Nicht-transitorisches computerlesbares Medium nach Anspruch 10, wobei die Anweisungen ferner konfiguriert sind, um den Prozessor zu veranlassen, Folgendes durchzuführen:
Empfangen von Wetterinformationen; und
Zugreifen auf das Profil basierend auf den Wetterinformationen.

## Revendications

1. Procédé mis en œuvre par ordinateur pour une conduite automatisée en mode mixte, dans lequel une conduite en mode mixte comprend la recommandation d'opérations de conduite incluant une première opération de conduite désignée comme commande autonome (321) et une seconde opération de conduite désignée comme commande manuelle, le procédé comprenant :
l'accès à un profil (201) associé à un trajet de conduite automatisée ;
la détermination d'une liste d'opérations de conduite pour le trajet de conduite automatisée ; et
la détermination, sur la base du profil, d'opérations de conduite recommandées (311) incluses dans la liste d'opérations,
dans lequel le profil inclut des données de compatibilité pour la première opération de conduite et la seconde opération de conduite, les données de compatibilité définissant des groupes d'opérations de conduite compatibles, où des opérations de conduite dans des groupes sont désignées comme commande manuelle ou autonome.

2. Procédé selon la revendication 1, dans lequel le profil inclut un ou plusieurs parmi :
un profil de conducteur (202A) incluant une propriété d'un utilisateur primaire associé au trajet de conduite automatisée ;
un profil de passager incluant une propriété d'un utilisateur secondaire associé au trajet de conduite automatisée ;
un profil de véhicule (202B) incluant des données historiques ou une propriété d'un véhicule associé au trajet de conduite automatisée ;
un profil d'environnement (202C) incluant une condition ambiante ou des données historiques d'environnement ; et un profil d'itinéraire incluant au moins un profil de segment de route ou des données historiques d'itinéraire.

3. Procédé selon la revendication 1, comprenant en outre :
la réception d'une demande d'acheminement incluant au moins une destination ; et
le calcul d'un itinéraire jusqu'à la destination, dans lequel l'accès au profil est réalisé en fonction de l'itinéraire calculé.

4. Procédé selon la revendication 3, comprenant en outre :
la réception de données de réglementation en réponse à l'itinéraire calculé, dans lequel les opérations de conduite recommandées sont choisies sur la base des données de réglementation.

5. Procédé selon la revendication 1, comprenant en outre :
le calcul d'un ajustement de temps de réaction pour la première opération de conduite ou la seconde opération de conduite.

6. Procédé selon la revendication 1, comprenant en outre :
le calcul d'un premier coût associé à la première opération de conduite désignée comme commande autonome.

7. Procédé selon la revendication 1, comprenant en outre :
l'affichage de la recommandation de conduite sur une interface de mode mixte.

8. Appareil pour une conduite automatisée en mode mixte, dans lequel une conduite en mode mixte comprend la recommandation d'opérations de conduite incluant une première opération de conduite désignée comme commande autonome et une seconde opération de conduite désignée comme commande manuelle, l'appareil comprenant des moyens de traitement de données incluant :
un comparateur de profil configuré pour choisir au moins une caractéristique parmi des données de profil associées à un trajet de conduite automatisée ;
un module de recommandation configuré pour déterminer, sur la base de la caractéristique du profil, des opérations de conduite recommandées incluses dans une liste d'opérations possibles,
dans lequel les caractéristiques du profil incluent des données de compatibilité pour la première opération de conduite et la seconde opération de conduite,
les données de compatibilité définissant des groupes d'opérations de conduite compatibles, où des opérations de conduite dans des groupes sont désignées comme commande manuelle ou autonome ; et
une interface de mode mixte configurée pour recevoir des modifications des opérations de conduite recommandées pour ajuster la commande autonome désignée ou la commande manuelle désignée.

9. Appareil selon la revendication 8, dans lequel l'appareil comprend en outre un dispositif de commande configuré pour calculer un premier coût associé à la première opération de conduite désignée comme commande autonome, et dans lequel l'interface de mode mixte affiche le premier coût apparié à la première opération de conduite recommandée.

10. Support non transitoire lisible par ordinateur incluant des instructions, pour une conduite automatisée en mode mixte, dans lequel une conduite en mode mixte comprend la recommandation d'opérations de conduite incluant une première opération de conduite désignée comme commande autonome (321) et une seconde opération de conduite désignée comme commande manuelle, qui, lorsqu'elles sont exécutées par un processeur, sont configurées pour amener le processeur à réaliser :
l'accès à un profil (201) associé à un trajet de conduite automatisée ;
la détermination d'une liste d'opérations de conduite pour le trajet de conduite automatisée ; et
la détermination, sur la base du profil, d'opérations de conduite recommandées incluses dans la liste d'opérations,
dans lequel le profil inclut des données de compatibilité pour la première opération de conduite et la seconde opération de conduite,
les données de compatibilité définissant des groupes d'opérations de conduite, où des opérations de conduite dans des groupes sont désignées comme commande manuelle ou autonome.

11. Support non transitoire lisible par ordinateur selon la revendication 10, les instructions étant en outre configurées pour amener le processeur à réaliser :
la réception de données de position ; et
l'accès au profil sur la base des données de position.

12. Support non transitoire lisible par ordinateur selon la revendication 10, les instructions étant en outre configurées pour amener le processeur à réaliser :
la détermination d'une identité d'utilisateur ; et
l'accès au profil sur la base de l'identité d'utilisateur.

13. Support non transitoire lisible par ordinateur selon la revendication 10, les instructions étant en outre configurées pour amener le processeur à réaliser :
la réception d'un identifiant de véhicule ; et
l'accès au profil sur la base de l'identifiant de véhicule.

14. Support non transitoire lisible par ordinateur selon la revendication 10, les instructions étant en outre configurées pour amener le processeur à réaliser :
la réception d'informations météorologiques ; et
l'accès au profil sur la base des informations météorologiques.
